# FASCICULE DE BREVET EUROPEEN

(11) **EP 3 145 863 B1**
(45) Date de publication et mention de la délivrance du brevet: **17.10.2018**
(21) Numéro de dépôt: 15732321.3
(22) Date de dépôt: 22.05.2015
(51) Int. Cl.: C01B 35/14, C07F 5/02

(54) **PROCÉDÉ D'OBTENTION DU BORAZANE**
VERFAHREN ZUR HERSTELLUNG VON BORAZAN
METHOD FOR PRODUCING BORAZANE

(30) Priorité: 23.05.2014 FR 1454695
(43) Date de publication de la demande: 29.03.2017
(73) Titulaire: ArianeGroup SAS, 75015 Paris (FR); Centre National de la Recherche Scientifique, 75016 Paris (FR); Université Claude Bernard Lyon I, 69625 Villeurbanne Cedex (FR)
(72) Inventeur: JACOB, Guy M., 91710 Vert le Petit (FR); DELALU, Henri R., 69002 Lyon (FR); DELAGE, Arthur, 84000 Avignon (FR)
(74) Mandataire: Le Roux, Martine
(86) Numéro de dépôt international: PCT/FR2015/051360
(87) Numéro de publication internationale: WO 2015/177483

(56) Documents cités:
- WO-A2-2007/120511

## Description

La présente invention a pour objet un procédé de synthèse (ou procédé d'obtention) du borazane ou ammonia borane de formule chimique NH₃BH₃. Ce procédé, qui permet d'obtenir un produit de grande pureté, est particulièrement intéressant de par une mise en oeuvre, sans solvant organique, « à température ambiante », et avec des recyclages possibles, notamment celui du coproduit formé.

La synthèse du borazane est une clé pour la réussite des programmes de génération d'hydrogène à partir de composés solides. Cette génération d'hydrogène à partir de composés solides est actuellement l'un des moyens proposés pour alimenter les piles à combustible. Dans ce contexte, l'utilisation du borazane (ou ammonia borane) en tant que précurseur solide pour la production d'hydrogène est d'ores et déjà connue.

En fait, le complexe borazane ou ammonia borane, de formule chimique NH₃BH₃, qui existe sous la forme d'une poudre cristalline blanche, présente le potentiel unique de contenir 19,6 % en masse d'hydrogène. Il est ainsi positionné comme un candidat particulièrement intéressant pour le stockage solide de l'hydrogène.

A ce jour, à la connaissance des inventeurs, li n'a toujours pas été proposé de procédé de synthèse du borazane, adapté à la fabrication de celui-ci à l'échelle industrielle. Diverses approches ont pourtant été étudiées, voire développées.

Les procédés classiques de synthèse du borazane (NH₃BH₃) comprennent la réaction d'au moins un sel d'ammonium (généralement choisi parmi le chlorure d'ammonium, le sulfate d'ammonium, le carbonate d'ammonium, le formiate d'ammonium et leurs mélanges) avec au moins un borohydrure de métal alcalin et/ou alcalino-terreux (généralement choisi parmi le borohydrure de lithium, le borohydrure de sodium et les mélanges de ceux-ci), dans un solvant, favorablement le tétrahydrofurane (THF). Ils sont largement et depuis longtemps (voir S. G. Shore et R. W. Parry, J. Am. Chem. Soc., 1955, 77, p. 6084-6085) décrits dans la littérature. La réaction est généralement effectuée entre un tel sel d'ammonium et un tel borohydrure. Le procédé le plus couramment utilisée consiste à faire réagir le carbonate d'ammonium (NH₄)₂CO₃ avec le borohydrure de sodium NaBH₄, dans du THF. Le NH₃BH₃ formé est soluble dans ledit THF. Il est séparé du carbonate de sodium formé lui aussi, qui précipite. En fait, à la fin de la réaction, la solution de THF (contenant donc le NH₃BH₃ en solution) est filtrée pour en éliminer la plus grande partie des matières solides en suspension. Le solvant THF est ensuite évaporé. Une poudre est enfin récupérée qui contient essentiellement le complexe recherché (borazane ou ammonia borane). Ces procédés classiques requièrent l'utilisation d'un solvant, tel le THF, très anhydre, afin d'éviter la production de sous-produits, tout particulièrement celle d'oxydes de bore, et sont mis en oeuvre dans des milieux relativement peu concentrés (du fait de la relativement faible solubilité des réactifs dans le solvant), ce qui entraine, pour une production à grande échelle, des couts importants de retraitements des solvants.

L'ammonialyse du diborane (B₂H₆), utilisant l'ammoniac liquide, ne permet pas d'obtenir directement le borazane. Elle conduit, mise en oeuvre à basse température, en règle générale à des températures se rapprochant de - 78°C, plutôt au diammoniate de diborane ([(NH₃)₂BH₂]⁺[BH₄]⁻). La formation du borazane, à partir dudit diammoniate de diborane, est ensuite réalisée par chauffage dudit diammoniate de diborane dans un solvant organique, préférentiellement un éther, contenant des traces de diborane, à la température ambiante, comme le montre le schéma réactionnel ci-dessous (voir, par exemple, Shore, SG ; Böddeker, KW dans Inorg Chem 1964, 3, 914, et Mayer, E. dans Inorg Chem, 1973, 12, 1954) :

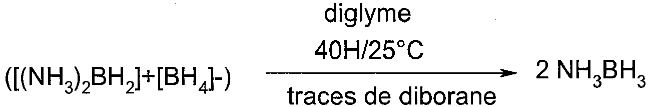

Ce procédé, comprenant une première réaction à basse température et une seconde réaction en présence d'un solvant, est donc d'une mise en oeuvre compliquée.

La demande de brevet WO 2007/120511 décrit un procédé de synthèse d'ammonia borane, comprenant la réaction d'au moins une amine borane avec de l'ammoniac gazeux, ladite amine borane étant choisie parmi les aniline borane, telles la diméthylaniline borane et la diéthylaniline borane, les phénylmorpholine borane et les pyridine borane, telle la lutidine. Au moins une des amine borane précitées est mise à réagir avec de l'ammoniac, introduit donc sous forme de gaz, avantageusement par barbotage dans un solvant renfermant ladite au moins une amine borane en solution. Un tel solvant est notamment choisi parmi le toluène, l'heptane, les xylènes et leurs mélanges. En référence au rendement de la réaction, le réactif ammoniac gazeux n'est pas introduit en excès (son introduction est stoppée une fois que l'amine borane est consommée : voir les exemples de ladite demande WO 2007/120511) du fait de la solubilité de l'ammonia borane formé dans les « mélanges » solvant/ammoniac gazeux. La séparation, en fin de réaction, de l'ammonia borane formé, de l'amine (n'ayant pas réagi) et du solvant, est par exemple réalisée par filtration. Une telle séparation ne garantit pas *a priori* un degré de pureté très élevé dudit ammonia borane formé. En tout état de cause, il convient assurément, en référence à la pureté dudit ammonia borane formé, d'optimiser l'élimination du solvant utilisé. La Demanderesse a évalué ce procédé (en faisant réagir de la diéthylaniline borane, en solution dans du toluène, avec de l'ammoniac gazeux (introduit en quantité stoechiométrique) ; ledit l'ammoniac gazeux étant mis à buller dans la solution). Elle n'a pu obtenir un rendement de synthèse de plus de 50 % (en masse). Par ailleurs, l'ammonia borane obtenu ne présentait pas la pureté requise pour une application pile à combustible. Il était pollué par du solvant (toluène) ; l'élimination efficace dudit solvant, par traitement thermique, étant difficile à mettre en oeuvre à des températures compatibles avec la stabilité dudit ammonia borane.

La demande de brevet WO 2010/123985 décrit un procédé de préparation de l'ammonia borane à partir d'un composé renfermant du bore dans sa formule chimique, apte à réagir sous pression avec l'ammoniac liquide pour former ledit ammonia borane. Ledit procédé, décrit de façon fort générale, comprend les étapes suivantes :
- la constitution d'un mélange réactionnel au sein d'un réacteur, ledit mélange réactionnel comprenant de l'ammoniac liquide anhydre et ledit composé renfermant du bore dans sa formule chimique apte à réagir sous pression avec l'ammoniac liquide pour former l'ammonia borane ; et
- le chauffage dudit mélange réactionnel, à partir d'une première température supérieure ou égale à - 33°C jusqu'à une deuxième température, sous pression, pour former l'ammonia borane.

Ledit composé renfermant du bore dans sa formule chimique peut être choisi dans une très longue liste comprenant notamment le borohydrure d'ammonium, le diborane et les alkyl amine borane (notamment le *tertio*butylamine borane et le triéthylamine borane). Un solvant organique, tel un éther, notamment choisi dans le groupe consistant en le tétrahydrofurane, le glyme, le diglyme, le triglyme, l'éther diéthylique, l'éther dibutylique, l'éther éthylique de méthyle, le diéthoxyéthane et leurs mélanges, est avantageusement présent dans le mélange réactionnel.

Selon une variante de mise en oeuvre, un borohydrure d'ammonium, généré *in situ* à partir d'un sel d'ammonium et d'un borohydrure dans de l'ammoniac liquide anhydre (la solubilité des réactifs dans ledit ammoniac liquide anhydre est supérieure à la solubilité desdits réactifs dans un éther, tel le THF (voir ci-dessus)), est décomposé dans un milieu solvant renfermant ledit ammoniac anhydre liquide et un éther. A l'issue de la réaction, lesdits ammoniac et éther doivent successivement être éliminés.

Selon une autre variante de mise en oeuvre, un complexe borane-THF est mis à réagir avec de l'ammoniac liquide anhydre à une température entre 4°C et 7°C. A l'issue de la réaction, il convient d'éliminer l'ammoniac liquide n'ayant pas réagi et le THF (libéré du complexe).

De manière générale, les procédés de l'art antérieur incluent donc une étape (d'évaporation, par exemple) pour se débarrasser d'un solvant organique qu'il a fallu manipuler en amont (en tant que solvant de réactif(s) ou comme élément constitutif d'un réactif). L'intervention d'un tel solvant rend la mise en oeuvre desdits procédés, tout particulièrement à l'échelle industrielle, complexe et augmente le prix de revient du produit recherché (borazane ou ammonia borane).

L'art antérieur ne propose pas, à ce jour, un procédé de mise en oeuvre simple, facilement industrialisable, pour obtenir directement de l'ammonia borane utilisable comme source solide d'hydrogène (i.e. présentant un degré de pureté tel, qu'il rend *a priori* superflu toute étape supplémentaire de purification).

L'homme du métier sait que l'ammonia borane ne doit pas renfermer d'impureté(s) (traces de solvant et/ou d'autres produits carbonés....) susceptibles de générer, lors de l'utilisation dudit ammonia borane comme source solide d'hydrogène dans une pile à combustible, des poisons rédhibitoires pour la pile, et notamment du CO (à ce jour, les piles à combustible, les plus tolérantes de ce point de vue, ne supportent pas plus de 3 % en masse de CO). Pour ce qui concerne les impuretés non susceptibles de générer un poison pour la pile (oxydes de bore, par exemple (voir ci-après)), elles sont, elles, préjudiciables en référence au rendement en ammonia borane (lors de sa production) et donc aussi en référence au rendement en hydrogène (lors de l'utilisation dudit ammonia borane).

La présente invention propose un procédé de mise en oeuvre simple, facilement industrialisable, pour obtenir directement de l'ammonia borane utilisable comme source solide d'hydrogène.

La présente invention a pour objet un procédé d'obtention du borazane (NH₃-BH₃), original et particulièrement intéressant. Ce procédé comprend :
- la mise à disposition d'un réacteur, équipé de moyens d'agitation et thermostaté à une température comprise entre une température θ₁ et 40°C ;
- l'introduction d'ammoniac liquide anhydre dans ledit réacteur ;
- l'introduction, avec agitation, dans ledit réacteur renfermant l'ammoniac liquide anhydre, d'un complexe amine borane, ledit complexe amine borane, dont l'amine correspondante n'est pas soluble dans l'ammoniac liquide anhydre (i.e. soluble à raison de moins de 10 g pour 100 g d'ammoniac liquide anhydre, à la température de 20°C), étant introduit en une quantité telle que le rapport molaire R = ammoniac liquide anhydre / complexe amine borane est supérieur ou égal à 5 ;

- l'agitation du mélange jusqu'à épuisement dudit complexe amine borane ;
- l'arrêt de l'agitation et l'obtention, au sein dudit réacteur, de deux phases démixtées :
   + une phase légère constituée essentiellement d'une solution d'ammoniac liquide anhydre renfermant du borazane ; et
   + une phase lourde constituée essentiellement de l'amine correspondant au complexe amine borane introduit ;
- l'isolement dudit borazane et le séchage sous vide de celui-ci ;
ladite température θ₁ étant supérieure ou égale à la température de fusion dudit complexe amine borane.

La synthèse du borazane selon l'invention est mise en oeuvre dans un réacteur :
- équipé de moyens d'agitation ;
- thermostaté à une température comprise entre la température θ1 et 40°C. Ladite température doit être suffisante (≥ θ₁) pour que le complexe amine borane soit liquide, mais non excessive (≤ 40°C), tout particulièrement en référence à la stabilité du borazane. La réaction est en fait avantageusement mise en oeuvre à température ambiante, i.e. à 20°C ;
- évidemment apte à renfermer le réactif ammoniac liquide (anhydre), i.e. supportant la pression. L'homme du métier comprend qu'un réacteur basse pression convient parfaitement, notamment, un réacteur basse pression en verre ou en métal. Il n'est évidemment pas exclu d'utiliser un réacteur haute pression. Généralement, l'ammoniac liquide anhydre est introduit à une pression entre 5.10⁵ à 10⁶ Pa (entre 5 et 10 bar, valeurs extrêmes comprises), avantageusement entre 7.10⁵ et 9.10⁵ Pa (entre 7 et 9 bar, valeurs extrêmes comprises).

Selon une variante avantageuse de mise en oeuvre du procédé de l'invention, le réacteur est, préalablement à l'introduction des réactifs (préalablement à l'introduction de l'ammoniac liquide anhydre), inerté. Il peut ainsi avantageusement être inerté à l'azote ou à l'argon. Cet inertage est opportun en vue de minimiser la formation parasite de sous-produits, tout particulièrement celle d'oxydes de bore (voir aussi l'intervention de l'ammoniac liquide, anhydre) et donc d'optimiser le rendement. Il n'est toutefois pas obligatoire, dans la mesure où les sous-produits concernés ne constituent pas des poisons pour piles à combustible. Ainsi, le procédé de l'invention peut-il aussi être mis en oeuvre en présence d'air dans le réacteur. Dans un tel cas, il a été généré environ 10 % en masse d'oxydes de bore.

Les réactifs intervenant sont, successivement :
- ledit ammoniac liquide anhydre (anhydre, en vue de minimiser la formation parasite de sous-produits, notamment d'oxydes de bore (voir aussi ci-dessus l'inertage du réacteur avantageusement mis en oeuvre)). Par anhydre, on entend, dans le présent texte, renfermant moins de 100 ppm d'eau ;
   et
- un complexe amine borane. Notons que le « un » employé ici doit se lire « au moins un ». En effet, il ne saurait être exclu du cadre de l'invention que plusieurs complexes amine borane soient mis à réagir avec l'ammoniac liquide. Généralement toutefois, pour une meilleure gestion de la réaction, un unique complexe amine borane est introduit dans le réacteur, pour réaction avec l'ammoniac liquide. La synthèse des complexes amine borane est décrite dans la littérature (voir plus loin) ; certains complexes amine borane sont commercialement disponibles.

Aucun solvant n'est nécessaire ; aucun solvant n'est employé.

Le procédé de l'invention comprend donc en fait :
- la mise à disposition d'ammoniac liquide anhydre,
- la mise à disposition d'un complexe amine borane, dont l'amine correspondante n'est pas soluble dans l'ammoniac liquide anhydre (i.e. soluble à raison de moins de 10 g pour 100 g d'ammoniac liquide anhydre, à la température de 20°C) ; ledit complexe présentant une température de fusion θ_{f}, et
- la mise à disposition d'un réacteur, équipé de moyens d'agitation et thermostaté à une température T comprise entre une température θ₁ et 40°C (θ₁ ≤ T ≤ 40°C), ladite température θ₁ étant supérieure ou égale à la température de fusion θ_{f} dudit complexe amine borane ; ladite température T étant donc telle que : θ_{f} ≤ T ≤ 40°C (de sorte que la réaction ait lieu entre l'ammoniac liquide et le complexe amine borane liquide et qu'il n'y ait pas de problème de stabilité pour le borazane synthétisé).

Ledit ammoniac liquide est introduit en premier de sorte que la réaction se déroule toujours en présence d'un excès d'ammoniac (voir ci-après).

Il est du mérite des inventeurs d'avoir sélectionné :
1) les réactifs, i.e. une réaction de type :
   Am.BH₃ + NH₃ (liquide) pour donner NH₃BH₃ + Am (équation générale 1) ; ainsi que
2) les conditions de mise en oeuvre de ladite réaction (l'ammoniac liquide anhydre, dans lequel l'amine (Am) n'est pas soluble, étant utilisé en excès : voir ci-dessus + ci-après)
qui assurent un résultat particulièrement intéressant.

Il est du mérite des inventeurs d'avoir sélectionné une réaction :
- dont la mise en oeuvre ne requiert pas de solvant organique (susceptible de polluer le borazane synthétisé),
- totale (ou quasi-totale),
- qui génère (directement) deux phases démixtées, celle renfermant le borazane recherché (en solution dans l'ammoniac liquide (anhydre)) se trouvant séparée de celle renfermant l'amine (issue du complexe amine borane de départ) ;
le borazane pouvant ainsi être aisément obtenu à un degré de pureté convenant pour son utilisation dans une pile à combustible.

Pour l'obtention dudit résultat, il convient que soient respectées, en sus des conditions déjà précisées ci-dessus, les conditions, concernant les réactifs, A et B détaillées ci-dessous :
A) le complexe Am.BH₃ n'est pas un (au moins un, voir ci-dessus) complexe Am.BH₃ quelconque ; il comporte une amine (Am) qui n'est pas soluble dans l'ammoniac liquide anhydre (renfermant moins de 100 ppm d'eau (voir ci-dessus)) aux températures de mise en oeuvre de la réaction. Cette non solubilité de l'amine a été quantifiée comme suit : moins de 10 g de l'amine pour 100 g d'ammoniac liquide anhydre, à la température de 20°C. Cette non solubilité est indispensable en référence à la démixtion, avec présence d'un minimum d'amine, dans l'ammoniac liquide qui renferme le borazane recherché, en référence donc à la pureté dudit borazane recherché. Ce critère de non solubilité écarte l'utilisation, comme réactif complexe amine borane de l'invention, de, notamment, le complexe N-tertiobutylamine borane, le complexe 4-méthylmorpholine borane et le complexe 4-éthylmorpholine borane.
Ledit complexe amine borane peut notamment consister en un complexe alkylamine borane, dont l'amine est tertiaire. Un tel complexe amine borane peut être choisi parmi le complexe N,N,N-triisopropylamine borane, le complexe N,N-diisopropyl N-éthylamine borane et leurs mélanges. Il consiste avantageusement en le complexe N,N-diisopropyl N-éthylamine borane. La réaction mise en oeuvre selon l'invention s'écrit alors comme suit : 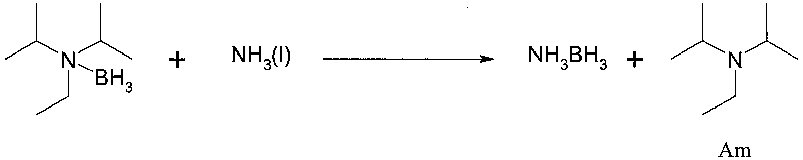
A toutes fins utiles, on propose ci-après les résultats d'une étude de solubilité de la N,N-diisopropyl N-éthylamine (Am) dans l'ammoniac liquide anhydre (renfermant moins de 100 ppm d'eau (voir ci-dessus)). Des échantillons renfermant ladite amine, dans l'ammoniac liquide anhydre, diluée aux taux appropriés dans le THF, ont été analysés par UV (spectrométrie ultraviolet) et GC/MS (chromatographie gazeuse-spectrométrie de masse). Les résultats expérimentaux sont reportés dans le tableau 1 suivant.

**Tableau 1**

| Solubilité de la N,N-diisopropyl N-éthylamine dans l'ammoniac liquide anhydre | |
|---|---|
| T (°C) | Solubilité (g) dans 100 g de NH₃(l)) |
| - 10 | 2,51 |
| 0 | 3,03 |
| 11 | 5,29 |
| 20 | 8,34 |

et
**B**) les réactifs interviennent dans un rapport molaire, R = ammoniac liquide anhydre / complexe amine borane, supérieur ou égal à 5. L'ammoniac liquide anhydre est donc présent en excès. Il est toujours présent en excès, de par l'ordre d'introduction des réactifs dans le réacteur (voir ci-dessus). Cet excès est intéressant à la fois :
α) pour la réaction (totale ou quasi-totale) recherchée, i.e. la formation du borazane suivant l'équation générale 1, et ceci, quand bien même cette réaction serait un équilibre. Ledit excès d'ammoniac favorise toujours la réaction vers la formation du borazane, et
β) pour limiter, voire éviter, une réaction entre le complexe amine borane de départ et le borazane obtenu. Cette réaction de décomplexation dudit complexe, mise en évidence par les inventeurs, s'écrit :

   Am.BH₃ + NH₃BH₃ → Am + H2 + Sous-produits

Pour ce qui concerne ce rapport molaire R≥5, on peut ajouter ce qui suit. Ledit rapport molaire est généralement compris entre 5 et 20 (5 ≤ R ≤ 20), avantageusement entre 8 et 20 (8 ≤ R ≤ 20), très avantageusement entre 8 et 12 (8 ≤ R ≤ 12). Selon une variante préférée, il est égal à 10. Un rapport R, élevé, est intéressant en référence au rendement (voir ci-dessus) mais il ne peut être trop élevé en référence à la cinétique de la réaction, d'où les plages indiquées ci-dessus pour les valeurs de R. A toutes fins utiles, le tableau 2 ci-après montre l'influence dudit rapport R sur la réaction mise en oeuvre avec le complexe N,N-diisopropyl N-éthylamine borane.

**Tableau 2**

| Influence de R (avec Am.BH₃ = N,N-diisopropyl N-éthylamine borane) | | | | | | |
|---|---|---|---|---|---|---|
| R= rapport molaire (NH₃/Am.BH₃) | NH₃ (mol) | Am.BH₃ (mol) | T (°C) | P (bar) | Temps (minute) | Rendement (taux de conversion) |
| 50 | 0,665 | 0,013 | 20 | 8,5 | 40 | 94 |
| 20 | 0,59 | 0,029 | 20 | 8,5 | 22 | 93 |
| 10 | 0,59 | 0,059 | 20 | 8,5 | 15 | 93 |
| 5 | 0,353 | 0,064 | 20 | 8,5 | 10 | 84 |

L'influence de la température de réaction a plus particulièrement été étudié, pour un rapport molaire R = [NH₃(I)] / [Am.BH₃] = 10, avec Am = N,N-diisopropyl N-éthylamine. Avec ce complexe amine borane, la réaction est avantageusement mise en oeuvre au sein d'un réacteur thermostaté à une température comprise entre 18 °C et 30 °C (valeurs extrêmes comprises), avantageusement entre 18 °C et 25 °C (valeurs extrêmes comprises), très avantageusement à 20 °C. Les conditions préconisées sont : R = 10, T = 20 °C (voir le tableau 2 ci-dessus).

Les deux conditions (**A** et **B**) explicitées ci-dessus - non solubilité de l'amine (Am) dans l'ammoniac liquide anhydre et ammoniac liquide anhydre en excès - peuvent, *a posteriori,* et *a posteriori* seulement, paraitre s'imposer. Il était nullement évident en fait de pouvoir maitriser l'ensemble des paramètres (température, pression, cinétique, ...) du procédé de l'invention.

La réaction, avec les réactifs identifiés ci-dessus (complexe amine borane adéquat et ammoniac liquide anhydre), dans les conditions précisées ci-dessus (excès dudit ammoniac (R ≥ 5)), est mise en oeuvre jusqu'à épuisement du complexe amine borane introduit, ce, en référence à son rendement et à la pureté du borazane produit. En effet, du complexe amine borazane qui n'aurait pas réagi serait responsable 1) d'un rendement non optimisé et 2) d'une pollution du borazane produit (voir ci-après). La notion d'épuisement se quantifie comme suit : à l'issue de la réaction, ledit complexe (« épuisé ») n'est plus détectable par RMN (i.e. ledit complexe n'est susceptible d'être présent qu'à une teneur inférieure à 1 % en masse). Au vu de l'excès d'ammoniac utilisé, cet épuisement n'est qu'une question de temps. Ainsi, l'agitation du mélange introduit dans le réacteur est-elle mise en oeuvre le temps nécessaire à l'épuisement du complexe introduit. Ce temps nécessaire dépend bien évidemment de la cinétique de la réaction, à la température où ladite réaction est mise en oeuvre. Il est généralement de 10 min à 120 min.

A l'arrêt de l'agitation, le milieu réactionnel (ayant réagi un temps suffisant (prédéterminé par des expériences préalables ou tout à fait gérable par analyse d'échantillons)) présente les deux phases identifiées ci-dessus et précisées ci-après :
+ une phase légère constituée essentiellement d'une solution d'ammoniac liquide anhydre renfermant du borazane (la solubilité du NH₃BH₃ dans l'NH₃(I) est de l'ordre de 33 g dans 100 g à 20°C) (ladite phase légère est constituée généralement à plus de 90 % en masse de ladite solution d'ammoniac liquide anhydre renfermant le borazane. Elle renferme donc généralement moins de 10 % en masse de produits non désiré(s) : amine (Am) dissoute, essentiellement + oxydes de bore + complexe amine borane (n'ayant pas réagi), à l'état de traces seulement (à moins de 1 % en masse (voir ci-dessus)) ; et
+ une phase lourde constituée essentiellement de l'amine (Am) correspondant au complexe amine borane introduit (ladite phase lourde est constituée généralement à plus de 94 % en masse de ladite amine. Elle renferme généralement de 2 à 6 % de produit(s) non désiré(s) : produit(s) de dégradation de l'amine, essentiellement).

Le procédé de l'invention ne fait donc pas intervenir de solvant organique (ce qui est particulièrement intéressant en référence à la simplicité de sa mise en oeuvre et en référence à la pureté du borazane obtenu). Il génère le borazane en solution dans l'ammoniac liquide anhydre, ladite solution (constituant la phase légère de la démixtion obtenue) renfermant un faible taux d'amine (Am) (fixé par la faible solubilité (moins de 10 g pour 100 g) de ladite amine dans ledit ammoniac liquide anhydre). Le borazane obtenu, une fois isolé (de ladite phase légère), est séché sous vide, pour être débarrassé de toute contamination trouvant son origine dans ledit faible taux d'amine de la phase légère. Ce séchage sous vide est efficace à des températures tout à fait compatibles avec la stabilité du borazane. L'homme du métier conçoit que cette opération de séchage sous vide est une opération bien plus légère que les opérations requises, selon l'art antérieur, pour se débarrasser des solvants utilisés.

Pour isoler le borazane, il convient de se débarrasser de la phase lourde d'une part et de l'ammoniac liquide anhydre (de la phase légère) d'autre part. On peut notamment procéder selon l'un ou l'autre des deux modes opératoires précisés ci-dessous :
+ mode opératoire A : après l'obtention, au sein du réacteur, des deux phases, lourde et légère, démixtées, on procède :
   - au soutirage de ladite phase lourde, constituée essentiellement de ladite au moins une amine ;
   - à l'élimination, par évaporation (suite à la dépressurisation du réacteur), de l'ammoniac liquide anhydre de ladite phase légère restée dans ledit réacteur ; puis
   - à l'essorage du solide (borazane) obtenu (l'amine récupérée lors de la mise en oeuvre dudit essorage (essorage conventionnel par filtration sous vide) est opportunément ajoutée à la phase lourde soutirée).

   Le borazane ainsi isolé (pollué par des traces d'amine) est alors séché sous vide.
+ mode opératoire B : après l'obtention, au sein du réacteur, des deux phases, lourde et légère, démixtées, on procède :
   - à l'élimination, par évaporation (suite à la dépressurisation du réacteur), de l'ammoniac liquide anhydre de ladite phase légère, surmontant ladite phase lourde ; puis
   - à la filtration du mélange (solide/liquide) résultant de ladite élimination : mélange borazane/phase lourde (en fait, phase lourde + amine qui était dissoute dans la phase légère). Ladite filtration est avantageusement mise en oeuvre sous gaz inerte (azote, notamment), en vue, là aussi, de minimiser, voire éviter la formation, d'oxydes de bore.

On isole ainsi le borazane de la phase lourde. Le borazane ainsi isolé (pollué par des traces d'amine) est alors séché sous vide.

Le mode opératoire B est préféré.

Il n'était pas évident qu'une réaction (quasi) complète puisse être menée, « à température ambiante », sans faire appel à un solvant organique et conduise par ailleurs aisément à du borazane de pureté recherchée (≥ 95 % (massique)). En cela, le procédé de l'invention est particulièrement performant. De surcroit, ledit procédé peut être mis en oeuvre avec recyclage, en amont, de l'ammoniac de la phase légère et/ou, avantageusement et, de la phase lourde (Am) (voir ci-après).

Quel que soit le mode opératoire exact mis en oeuvre pour la récupération du borazane formé, il comprend avantageusement récupération et valorisation de l'ammoniac éliminé par évaporation (ammoniac gazeux). Ledit ammoniac (gazeux) récupéré peut ainsi être recompressé (ammoniac liquide) et avantageusement recyclé (liquide) dans le réacteur.

Quel que soit le mode opératoire exact mis en oeuvre pour la récupération du borazane formé, il comprend avantageusement récupération et valorisation de l'amine (phase lourde (*a minima*) (phase lourde soutirée + avantageusement amine récupérée à l'essorage (mode opératoire A ci-dessus) ou phase lourde + amine dissoute dans la phase légère (mode opératoire B ci-dessus)). Cette valorisation s'inscrit de préférence dans un contexte de synthèse du complexe amine borane à partir de diborane (B₂H₆) et d'une amine (Am), mise en oeuvre en amont de la réaction dudit complexe avec l'ammoniac liquide anhydre. Cette synthèse a notamment été décrite dans les brevets US 3 296 144 et US 5 481 038.

Le procédé de l'invention peut en effet comprendre, en amont de la réaction complexe amine borane (Am.BH₃) avec ammoniac liquide anhydre (NH₃(I)), la synthèse dudit complexe amine borane à partir de diborane (B₂H₆) et d'au moins une amine (Am). Pour la mise en oeuvre de cette synthèse, alors couplée à ladite réaction, l'amine récupérée est avantageusement utilisée.

Le procédé d'obtention du borazane de l'invention, selon la réaction : Am.BH₃ + NH₃(I) → NH₃BH₃ + Am, est ainsi avantageusement couplée à la synthèse du complexe Am.BH₃ (B₂H₆ + Am → : Am.BH₃) et mise en oeuvre avec recyclage de l'amine Am (i.e. avec recyclage du coproduit formé).

L'homme du métier a d'ores et déjà saisi tout l'intérêt de l'invention.

Ladite invention est maintenant, de façon nullement limitative, décrite en référence aux figures annexées et illustrée par les deux exemples ci-après.

Lesdites figures illustrent deux variantes de mise en oeuvre du procédé de l'invention.
La figure 1 est un organigramme (« flow-sheet ») d'une variante de mise en oeuvre du procédé de l'invention selon laquelle le borazane formé est récupéré après soutirage de la phase lourde (mode opératoire A ci-dessus) ;
La figure 2 est un organigramme (« flow-sheet ») d'une variante de mise en oeuvre du procédé de l'invention selon laquelle le borazane formé est récupéré après son mélange dans la phase lourde (mode opératoire B ci-dessus).

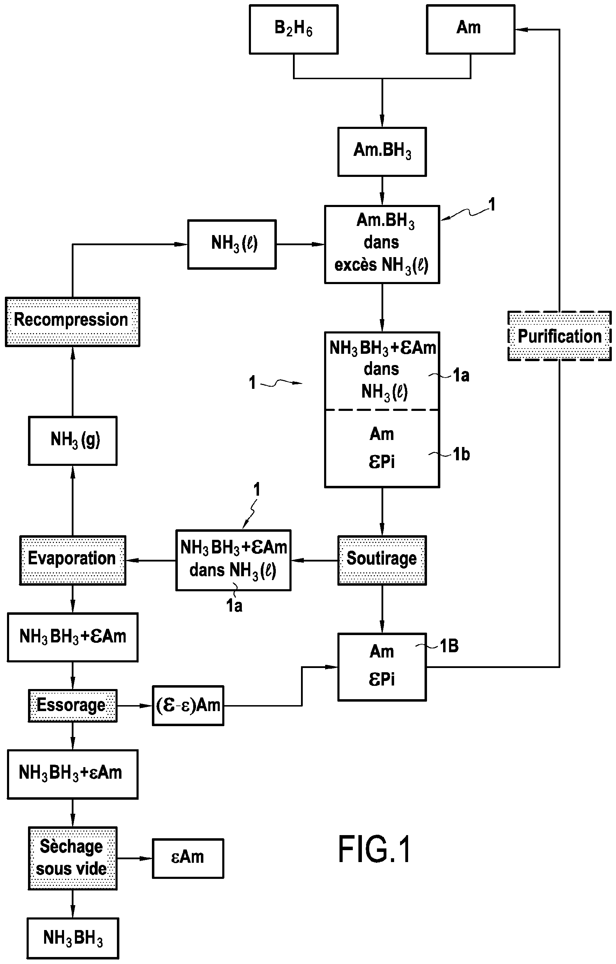

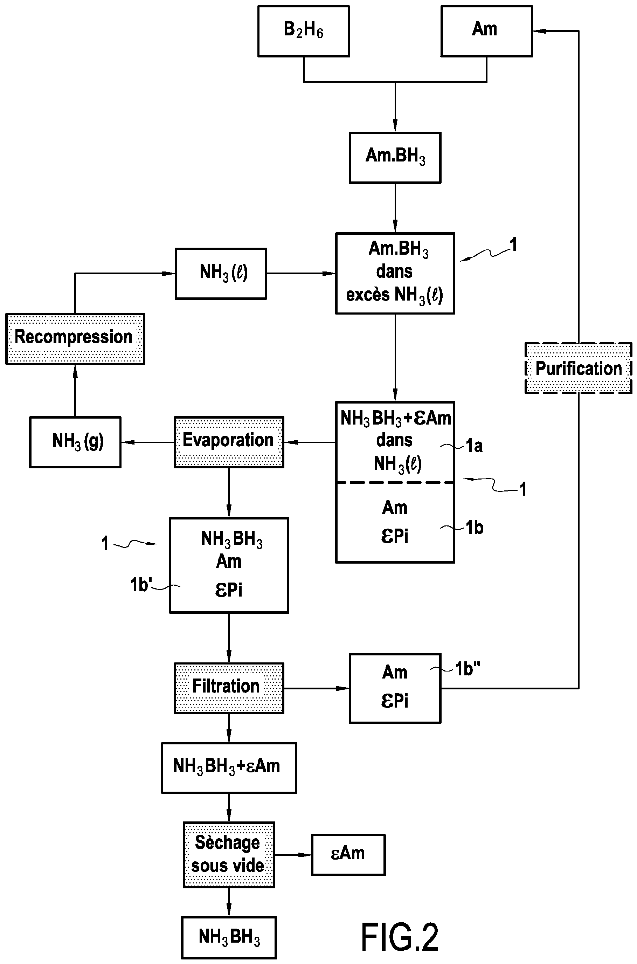

Sur les figures 1 et 2, la synthèse du complexe Am.BH₃ est réalisée, en amont, à partir de diborane (B₂H₆) et d'une amine (Am).

Après introduction d'ammoniac liquide anhydre NH₃(I) dans le réacteur 1, le complexe Am.BH₃ synthétisé en amont y est introduit et mis à réagir.

A l'issue de la réaction, on trouve dans ledit réacteur 1, démixtées :
- une phase légère la, surplombant une phase lourde 1b, ladite phase légère la renfermant essentiellement le borazane formé (NH₃BH₃) en solution dans l'ammoniac liquide anhydre NH₃(I) mais aussi de l'amine dissoute (εAm) dans ledit ammoniac liquide anhydre NH₃(I) ;
- ladite phase lourde 1b refermant essentiellement l'amine (Am). On a indiqué la présence, en faible quantité, dans ladite phase lourde 1b, d'autres produits : εPi (essentiellement produits de décomposition de ladite amine (Am)).

Selon le mode opératoire schématisé sur la figure 1, la phase lourde 1b est soutirée. Le borazane formé est alors isolé comme suit : 1) le réacteur 1 est dépressurisé, pour évaporation de l'ammoniac, et 2) le borazane obtenu, pollué par de l'amine (εAm) est essoré par filtration sous vide (il est ainsi, sans altération, quasi débarrassé de l'amine et l'amine récupérée est opportunément ajoutée à la phase lourde soutirée). Le borazane ainsi isolé n'est plus pollué que par des traces d'amine (εAm). On a schématiquement montré que ces traces sont en quantité très limitée (εAm <εAm). Ledit borazane isolé est enfin séché sous vide.

Selon le mode opératoire schématisé sur la figure 2, le réacteur 1 est tout d'abord dépressurisé. L'ammoniac est évaporé et le borazane se retrouve sous forme solide dans la phase lourde 1b. Il se constitue en fait un mélange - solide / liquide - qui, outre ladite phase lourde 1b renferme donc ledit borazane et de l'amine (εAm) provenant de la phase légère 1a. Ce mélange est référencé 1b'. Pour des raisons de simplification, on a indiqué Am (= Am + εAm). Une filtration (avantageusement sous gaz inerte) est alors mise en oeuvre pour l'isolement dudit borazane. Le borazane isolé est séché sous vide pour être débarrassé (sans altération) des traces d'amine (εAm) entrainées à la filtration. On a schématiquement montré que ces traces sont en quantité très limitée (εAm <εAm).

La phase lourde finalement récupérée (référencée 1B (= 1b + (ε-ε)Am) sur la figure 1 et référencée 1b" (= 1b + (ε-ε)Am) sur la figure 2 ; les dites figures se considérant évidemment indépendamment) est, selon les deux modes opératoires schématisés, recyclée pour la synthèse amont du complexe Am.BH₃. Au cours de ce recyclage, elle est éventuellement (d'où les pointillés) purifiée. Cette purification éventuelle peut notamment être mise en oeuvre par distillation. Cette purification vise principalement à éliminer les produits de décomposition de l'amine Am (εPi, présents, en plus ou moins grande quantité, selon la température de mise en oeuvre de la réaction).

L'ammoniac gazeux récupéré est, selon les deux modes opératoires schématisés, recompressé et utilisé, liquide, pour alimenter le réacteur 1.

### Exemple 1

Un réacteur en verre, à double enveloppe, d'un volume de 300 ml, supportant une pression de 10⁶ Pa (10 bar), équipé d'un agitateur par entraînement magnétique, a été utilisé.

Il a préalablement été inerté à l'azote et thermostaté à 20°C. 0,59 mole d'ammoniac ont été transférées, à partir d'une bouteille d'ammoniac (sous 7x10⁵ à 8x10⁵ Pa (7 à 8 bar de pression)), dans ledit réacteur inerté et thermostaté.

L'agitation a alors été mise en marche. Le complexe amine-borane (N,N-diisopropyl N-éthylamine borane (produit commercial) ; 0,059 mole) a ensuite été ajouté en moins de 30 s. Le rapport molaire ammoniac (liquide) / complexe amine borane était donc égal à 10.

Après 15 min, l'agitation a été stoppée. Pour vérifier que la réaction (N,N-diisopropyl N-éthylamine borane + NH₃(liquide)) était terminée, un échantillon du milieu réactionnel (liquide) a été prélevé. Le prélèvement (dans une ampoule) a été mis en oeuvre, de façon hermétique, après mise sous pression d'azote du ciel du volume interne du réacteur. L'échantillon prélevé, dilué dans du tétrahydrofurane (THF), a été analysé par RMN ¹¹B (bore). L'absence du complexe amine-borane a été confirmée. La réaction a donc été totale (dans les limites de la détection de l'analyse RMN).

Suite à l'arrêt de l'agitation, le milieu réactionnel a démixté et deux phases ont été observées : une phase légère, renfermant essentiellement le borazane (NH₃BH₃) formé en solution dans l'ammoniac liquide et une phase lourde renfermant essentiellement l'amine (N,N-diisopropyl N-éthylamine). Lesdites deux phases sont susceptibles de renfermer, en faibles quantités, des produits secondaires (pour la phase légère essentiellement de l'amine dissoute et pour la phase lourde essentiellement des produits de décomposition de l'amine).

Pour isoler le borazane formé, présent dans la phase légère, on a procédé comme suit :
- soutirage, par une canule de prélèvement située au fond du réacteur, de la phase lourde renfermant essentiellement l'amine (N,N-diisopropyl N-éthylamine) ; puis
- évaporation de l'ammoniac (liquide) de la phase légère par dépressurisation du réacteur (pendant 15 min à la température de 20°C).

Le borazane récupéré (solide) contenait de l'amine (liquide) (environ 9,5 % en masse). Il a d'abord été essoré par filtration (sous azote, à température ambiante, sous un vide de 10³ Pa (10 mbar)) puis séché sous vide en étuve (à 20°C, pendant 12 h, sous une pression réduite de 10³ Pa (10 mbar)).

Le borazane a finalement été obtenu avec un rendement de 93 % (il a été tenu compte, pour le calcul de ce rendement, du prélèvement effectué en amont).

Sa pureté a été contrôlée par RMN solide. Il était pur à 97 % en masse. La principale impureté qu'il renfermait était des oxydes de bore. Le borazane obtenu a été conservé sous argon.

L'ammoniac récupéré a été recompressé et recyclé en amont de la synthèse (pour réaction avec le complexe amine-borane).

### Exemple 2

Un réacteur en verre, à double enveloppe, d'un volume de 300 ml, supportant une pression de 10⁶ Pa (10 bar), équipé d'un agitateur par entraînement magnétique, a été utilisé.

Il a préalablement été inerté à l'azote et thermostaté à 20°C.

0,665 mole d'ammoniac ont été transférées, à partir d'une bouteille d'ammoniac (sous 7x10⁵ à 8x10⁵ Pa (7 à 8 bar de pression)), dans ledit réacteur inerté et thermostaté.

L'agitation a alors été mise en marche. Le complexe amine-borane (N,N-diisopropyl N-éthylamine borane (produit commercial) ; 0,013 mole) a ensuite été ajouté en moins de 30 s. Le rapport molaire ammoniac (liquide) / complexe amine-borane était donc supérieur à 51.

Après 40 min, l'agitation a été stoppée. Pour vérifier que la réaction (N,N-diisopropyl N-éthylamine borane + NH₃(liquide)) était terminée, un échantillon du milieu réactionnel (liquide) a été prélevé. Le prélèvement (dans une ampoule) a été mis en oeuvre, de façon hermétique, après mise sous pression d'azote du ciel du volume interne du réacteur. L'échantillon prélevé, dilué dans du tétrahydrofurane (THF), a été analysé par RMN (bore). L'absence du complexe amine-borane a été confirmée. La réaction a donc été totale (dans les limites de la détection de l'analyse RMN).

Suite à l'arrêt de l'agitation, le milieu réactionnel a démixté et deux phases ont été observées : une phase légère, renfermant essentiellement le borazane (NH₃BH₃) formé en solution dans l'ammoniac liquide et une phase lourde renfermant essentiellement l'amine (N,N-diisopropyl N-éthylamine). Lesdites deux phases sont susceptibles de renfermer, en faibles quantités, des produits secondaires (pour la phase légère essentiellement de l'amine dissoute et pour la phase lourde essentiellement des produits de décomposition de l'amine).

Pour isoler le borazane formé, présent dans la phase légère, on a procédé comme suit :
- évaporation de l'ammoniac (liquide) de ladite phase légère par dépressurisation du réacteur (pendant 15 min à la température de 20°C) ;
- récupération d'un mélange solide/liquide renfermant principalement le borazane et l'amine (borazane (solide)/amine (liquide)) ;
- filtration sous gaz inerte (azote) pour la récupération dudit borazane.

Le borazane isolé a alors été séché sous vide, à 20°C, pendant 12 h, sous une pression réduite de 10³ Pa (10 mbar) (pour élimination des traces d'amine amine le polluant).

Le borazane a ainsi été obtenu avec un rendement de 94 % (il a été tenu compte, pour le calcul de ce rendement, du prélèvement effectué en amont).

Sa pureté a été contrôlée par RMN solide. Il était pur à 97 % en masse. La principale impureté qu'il renfermait consistait en des oxydes de bore (malgré l'inertage à l'azote, il est en fait quasiment impossible d'éviter la formation d'une très faible quantité d'oxyde(s) de bore, de par, vraisemblablement, la présence de faibles quantités d'oxygène dans le gaz d'inertage et/ou dans l'ammoniac liquide). Le borazane obtenu a été conservé sous argon.

L'ammoniac récupéré a été recompressé et recyclé en amont de la synthèse (pour réaction avec le complexe amine-borane).

## Revendications

1. Procédé d'obtention du borazane (NH₃-BH₃), **caractérisé en ce qu'**il comprend :
- la mise à disposition d'un réacteur (1), équipé de moyens d'agitation et thermostaté à une température comprise entre une température θ₁ et 40°C ;
- l'introduction d'ammoniac liquide anhydre (NH₃(I)) dans ledit réacteur (1) ;
- l'introduction, avec agitation, dans ledit réacteur (1) renfermant l'ammoniac liquide anhydre (NH₃(I)), d'un complexe amine borane (Am.BH₃), ledit complexe amine borane (Am.BH₃), dont l'amine correspondante (Am) n'est soluble dans l'ammoniac liquide anhydre qu'à raison de moins de 10 g dans 100 g d'ammoniac liquide anhydre à 20°C, étant introduit en une quantité telle que le rapport molaire R = ammoniac liquide anhydre (NH₃(I)) / complexe amine borane (Am.BH₃) est supérieur ou égal à 5 ;
- l'agitation du mélange jusqu'à épuisement dudit complexe amine borane ;
- l'arrêt de l'agitation et l'obtention au sein dudit réacteur (1), de deux phases démixtées :
+ une phase légère (1a) constituée essentiellement d'une solution d'ammoniac liquide anhydre (NH₃(I)) renfermant du borazane ; et
+ une phase lourde (1b) constituée essentiellement de l'amine (Am) correspondant au complexe amine borane (Am.BH₃) introduit ;
- l'isolement dudit borazane et le séchage sous vide de celui-ci ;
ladite température θ₁ étant supérieure ou égale à la température de fusion dudit complexe amine borane (Am.BH₃).

2. Procédé selon la revendication 1, **caractérisé en ce que** ledit ammoniac liquide anhydre (NH₃(I)) est introduit à une pression entre 5.10⁵ et 10⁶ Pa (5 et 10 bar), avantageusement entre 7.10⁵ et 9.10⁵ Pa (7 et 9 bar).

3. Procédé selon la revendication 1 ou 2, **caractérisé en ce que** ledit réacteur (1) est, préalablement à l'introduction de l'ammoniac liquide anhydre (NH₃(I)), inerté, avantageusement à l'azote ou à l'argon.

4. Procédé selon l'une quelconque des revendications 1 à 3, **caractérisé en ce que** ledit complexe amine borane (Am.BH₃) est un complexe alkylamine borane, dont l'amine (Am) est une amine tertiaire.

5. Procédé selon la revendication 4, **caractérisé en ce que** ledit complexe amine borane (Am.BH₃) est choisi parmi le complexe N,N,N-triisopropylamine borane, le complexe N,N-diisopropyl N-éthylamine borane, et leurs mélanges, **en ce qu'**il consiste avantageusement en le complexe N,N-diisopropyl N-éthylamine borane.

6. Procédé selon l'une quelconque des revendications 1 à 5, **caractérisé en ce que** ledit rapport molaire R est compris entre 5 et 20 (5 ≤ R ≤ 20), avantageusement entre 8 et 20 (8 ≤ R ≤ 20), très avantageusement entre 8 et 12 (8 ≤ R ≤ 12).

7. Procédé selon l'une quelconque des revendications 1 à 6, **caractérisé en ce que** ledit réacteur (1) est thermostaté entre 18 et 30°C, avantageusement entre 18 et 25°C, très avantageusement à 20°C et **en ce que** ledit complexe amine borane (Am.BH₃) consiste en le complexe N,N-diisopropyl N-éthylamine borane.

8. Procédé selon l'une quelconque des revendications 1 à 7, **caractérisé en ce que** ledit isolement du borazane comprend :
- le soutirage de ladite phase lourde (1b), constituée essentiellement de ladite amine (Am) ;
- l'élimination, par évaporation, de l'ammoniac liquide anhydre (NH₃(I)) de ladite phase légère (1a) restée dans ledit réacteur (1) ; et
- l'essorage du solide obtenu.

9. Procédé selon l'une quelconque des revendications 1 à 7, **caractérisé en ce que** ledit isolement du borazane comprend :
- l'élimination, par évaporation, de l'ammoniac liquide anhydre (NH₃(I)) de ladite phase légère (1a), surmontant ladite phase lourde (1b) ; et
- la filtration du mélange (1b') résultant de ladite élimination.

10. Procédé selon la revendication 8 ou 9, **caractérisé en ce qu'**il comprend une recompression de l'ammoniac éliminé par évaporation et avantageusement son recyclage dans ledit réacteur (1).

11. Procédé selon l'une quelconque des revendications 1 à 10, **caractérisé en ce qu'**il comprend, en amont, la synthèse du complexe amine borane (Am.BH₃) à partir de diborane (B₂H₆) et d'une amine (Am).

12. Procédé selon l'une quelconque des revendications 8 à 11, **caractérisé en ce qu'**il comprend, en amont, la synthèse du complexe amine borane (Am.BH₃) à partir de diborane (B₂H₆) et d'une amine (Am) et **en ce que** la majeure partie de l'amine (Am) générée dans ledit réacteur (1), au moins l'amine (Am) présente dans ladite phase lourde (1b), est recyclée pour la mise en oeuvre de ladite synthèse du complexe amine borane (Am.BH₃).

## Patentansprüche

1. Verfahren zur Herstellung von Borazan (NH₃-BH₃), **dadurch gekennzeichnet, dass** dieses umfasst:
- Bereitstellen eines Reaktors (1), der mit Rührmitteln ausgestattet und auf eine Temperatur zwischen einer Temperatur θ₁ und 40°C thermostatisiert ist,
- Einbringen von wasserfreiem flüssigen Ammoniak (NH₃(I)) in den Reaktor (1),
- Einbringen, unter Rühren, in den Reaktor (1), der wasserfreien flüssigen Ammoniak (NH₃(I)) enthält, eines Amin-Boran-Komplexes (Am.BH₃), wobei der Amin-Boran-Komplex (Am.BH₃), dessen entsprechendes Amin (Am) in wasserfreiem flüssigen Ammoniak nur bei weniger als 10 g in 100 g wasserfreiem flüssigen Ammoniak bei 20°C löslich ist, in einer derartigen Menge eingebracht wird, dass das Molverhältnis R = wasserfreier flüssiger Ammoniak (NH₃I))/Amin-Boran-Komplex (Am.BH₃) größer oder gleich 5 ist,
- Rühren der Mischung bis zur Erschöpfung des Amin-Boran-Komplexes,
- Anhalten des Rührens und Erhalten, im Inneren des Reaktors (1), von zwei entmischten Phasen:
+ einer leichten Phase (1a), die im Wesentlichen aus einer Lösung von wasserfreiem flüssigen Ammoniak (NH₃(I)) besteht, enthaltend Borazan, und
+ einer schweren Phase (1b), die im Wesentlichen aus dem Amin (Am) besteht, das dem eingebrachten Amin-Boran-Komplex (Am.BH₃) entspricht,
- Isolieren des Borazans und Trocknen desselben im Vakuum,
wobei die Temperatur θ₁ größer oder gleich der Schmelztemperatur des Amin-Boran-Komplexes (Am.BH₃) ist.

2. Verfahren nach Anspruch 1, **dadurch gekennzeichnet, dass** der wasserfreie flüssige Ammoniak (NH₃(I)) bei einem Druck zwischen 5.10⁵ und 10⁶ Pa (5 und 10 bar), vorteilhaft zwischen 7.10⁵ und 9.10⁵ Pa (7 und 9 bar), eingebracht wird.

3. Verfahren nach Anspruch 1 oder 2, **dadurch gekennzeichnet, dass** der Reaktor (1), vor dem Einbringen von wasserfreiem flüssigen Ammoniak (NH₃(I)), inertisiert wird, vorteilhaft mit Stickstoff oder Argon.

4. Verfahren nach einem der Ansprüche 1 bis 3, **dadurch gekennzeichnet, dass** der Amin-Boran-Komplex (Am.BH₃) ein Alkylamin-Boran-Komplex ist, dessen Amin (Am) ein tertiäres Amin ist.

5. Verfahren nach Anspruch 4, **dadurch gekennzeichnet, dass** der Amin-Boran-Komplex (Am.BH₃) aus dem Komplex N,N,N-Triisopropylamin-Boran, dem Komplex N,N-Diisopropyl-N-ethylamin-Boran und ihren Mischungen ausgewählt wird, und dadurch, dass dieser vorteilhaft aus dem N,N-Diisopropyl-N-ethylamin-Boran-Komplex besteht.

6. Verfahren nach einem der Ansprüche 1 bis 5, **dadurch gekennzeichnet, dass** das Molverhältnis R zwischen 5 und 20 (5 ≤ R ≤ 20), vorteilhaft zwischen 8 und 20 (8 ≤ R ≤ 20), sehr vorteilhaft zwischen 8 und 12 (8 ≤ R ≤ 12), beträgt.

7. Verfahren nach einem der Ansprüche 1 bis 6, **dadurch gekennzeichnet, dass** der Reaktor (1) zwischen 18 und 30°C, vorteilhaft zwischen 18 und 25°C, sehr vorteilhaft auf 20°C, thermostatisiert wird, und dadurch, dass der Amin-Boran-Komplex (Am.BH₃) aus dem N,N-Diisopropyl-N-ethylamin-Boran-Komplex besteht.

8. Verfahren nach einem der Ansprüche 1 bis 7, **dadurch gekennzeichnet, dass** das Isolieren des Borazans umfasst:
- Entnehmen der schweren Phase (1b), die im Wesentlichen aus dem Amin (Am) besteht,
- Eliminieren, durch Abdampfen, des wasserfreien flüssigen Ammoniaks (NH₃(I)) aus der leichten Phase (1a), die im Reaktor (1) verblieben ist, und
- Entwässern des erhaltenen Feststoffs.

9. Verfahren nach einem der Ansprüche 1 bis 7, **dadurch gekennzeichnet, dass** das Isolieren des Borazans umfasst:
- Eliminieren, durch Abdampfen, des wasserfreien flüssigen Ammoniaks (NH₃(I)) aus der leichten Phase (1a) über der schweren Phase (1b), und
- Filtrieren der Mischung (1b'), die durch das Eliminieren erhalten wird.

10. Verfahren nach Anspruch 8 oder 9, **dadurch gekennzeichnet, dass** dieses eine Rekompression des durch Abdampfen eliminierten Ammoniaks und vorteilhaft seine Rückführung in den Reaktor (1) umfasst.

11. Verfahren nach einem der Ansprüche 1 bis 10, **dadurch gekennzeichnet, dass** dieses, stromaufwärts, die Synthese des Amin-Boran-Komplexes (Am.BH₃) aus Diboran (B₂H₆) und einem Amin (Am) umfasst.

12. Verfahren nach einem der Ansprüche 8 bis 11, **dadurch gekennzeichnet, dass** dieses, stromaufwärts, die Synthese des Amin-Boran-Komplexes (Am.BH₃) aus Diboran (B₂H₆) und einem Amin (Am) umfasst, und dadurch, dass der Großteil des Amins (Am), das in dem Reaktor (1) erzeugt wird, mindestens des Amins (Am), das in der schweren Phase (1b) vorhanden ist, zur Durchführung der Synthese des Amin-Boran-Komplexes (Am.BH₃) rückgeführt wird.

## Claims

1. A process for obtaining borazane (NH₃-BH₃), **characterized in that** it comprises:
- providing a reactor (1), equipped with stirring means and thermostatically regulated at a temperature between a temperature θ₁ and 40°C;
- introducing anhydrous liquid ammonia (NH₃(I)) into said reactor (1);
- introducing, with stirring, into said reactor (1) containing anhydrous liquid ammonia (NH₃(I)), an amine borane complex (Am.BH₃), said amine borane complex (Am.BH₃), the corresponding amine (Am) of which is soluble in anhydrous liquid ammonia only to a proportion of less than 10 g in 100 g of anhydrous liquid ammonia at 20°C, being introduced in an amount such that the mole ratio R = anhydrous liquid ammonia (NH₃(I))/amine borane complex (Am.BH₃) is greater than or equal to 5;
- stirring the mixture to the point of depletion of said amine borane complex;
- stopping the stirring and obtaining, in said reactor (1), two demixed phases:
+ a light phase (1a) constituted essentially of a solution of anhydrous liquid ammonia (NH₃(I)) containing borazane; and
+ a heavy phase (1b) constituted essentially of the amine (Am) corresponding to the amine borane complex (Am.BH₃) introduced;
- isolating said borazane and drying under vacuum thereof;
said temperature θ₁ being greater than or equal to the melting point of said amine borane complex (Am.BH₃).

2. The process according to claim 1, **characterized in that** said anhydrous liquid ammonia (NH₃(I)) is introduced at a pressure of between 5×10⁵ and 10⁶ Pa (5 and 10 bar), advantageously between 7×10⁵ and 9×10⁵ Pa (7 and 9 bar).

3. The process according to claim 1 or 2, **characterized in that** said reactor (1) is, prior the introduction of the anhydrous liquid ammonia (NH₃(I)), rendered inert, advantageously with nitrogen or argon.

4. The process according to any one of claims 1 to 3, **characterized in that** said amine borane complex (Am.BH₃) is an alkylamine borane complex, the amine (Am) of which is a tertiary amine.

5. The process according to claim 4, **characterized in that** said amine borane complex (Am.BH₃) is chosen from the N,N,N-triisopropylamine borane complex, the N,N-diisopropyl-N-ethylamine borane complex, and mixtures thereof, **in that** it advantageously consists of the N,N-diisopropyl-N-ethylamine borane complex.

6. The process according to any one of claims 1 to 5, **characterized in that** said mole ratio R is between 5 and 20 (5 ≤ R ≤ 20), advantageously between 8 and 20 (8 ≤ R ≤ 20), very advantageously between 8 and 12 (8 ≤ R ≤ 12).

7. The process according to any one of claims 1 to 6, **characterized in that** said reactor (1) is thermostatically regulated between 18 and 30°C, advantageously between 18 and 25°C, very advantageously at 20°C and **in that** said amine borane complex (Am.BH₃) consists of the N,N-diisopropyl-N-ethylamine borane complex.

8. The process according to any one of claims 1 to 7, **characterized in that** isolating borazane comprises:
- discharging said heavy phase (1b), constituted essentially of said amine (Am);
- removing by evaporation the anhydrous liquid ammonia (NH₃(I)) of said light phase (1a) remaining in said reactor (1); and
- suction filtrating the solid obtained.

9. The process according to any one of claims 1 to 7, **characterized in that** said isolation of borazane comprises:
- removing, by evaporation, the anhydrous liquid ammonia (NH₃(I)) of said light phase (1a), lying on said heavy phase (1b); and
- filtrating the mixture (1b') resulting from said removal.

10. The process according to claim 8 or 9, **characterized in that** it comprises recompressing the ammonia removed by evaporation and advantageously recycling thereof into said reactor (1).

11. The process according to any one of claims 1 to 10, **characterized in that** it comprises, upstream, the synthesis of the amine borane complex (Am.BH₃) from diborane (B₂H₆) and an amine (Am).

12. The process according to any one of claims 8 to 11, **characterized in that** it comprises, upstream, the synthesis of the amine borane complex (Am.BH₃) from diborane (B₂H₆) and an amine (Am) and **in that** the majority of the amine (Am) generated in said reactor (1), at least the amine (Am) present in said heavy phase (1b), is recycled for performing said synthesis of the amine borane complex (Am.BH₃).
